# EUROPEAN PATENT APPLICATION

(11) **EP 2 918 665 A1**
(43) Date of publication of application: **16.09.2015**
(21) Application number: 13853018.3
(22) Date of filing: 22.10.2013
(51) Int. Cl.: C11D 7/50, C10M 105/50, C11D 7/26, C11D 7/30, C11D 7/32

(54) **SOLVENT COMPOSITION**

(30) Priority: 07.11.2012 JP 2012245590
(71) Applicant: Asahi Glass Company, Limited, Tokyo 100-8405 (JP)
(72) Inventor: MITSUOKA, Hiroaki, Tokyo 100-8405 (JP); TSUZAKI, Masaaki, Tokyo 100-8405 (JP)
(74) Representative: Müller-Boré & Partner Patentanwälte PartG mbB
(86) International application number: PCT/JP2013/078622
(87) International publication number: WO 2014/073372

(57) **Abstract**

It is an object of the present invention to provide a stable solvent composition which provides excellent solubility of various organic substances, has sufficient drying property and has no adverse influences on global environment and is stabilized and not decomposed, and which can be used without adversely affecting objects made of various materials such as metal, plastic or elastomer, for a wide range of industrial use such as cleaning or coating.

A solvent composition comprising a solvent containing 1,1-dichloro-2,3,3,3-tetrafluoropropene, and at least one stabilizer selected from the group consisting of a phenol, an ether, an epoxide and an amine.

## Description

### TECHNICAL FIELD

The present invention relates to a stable solvent composition which provides an excellent solubility of various organic substances, has a sufficient drying property and has no adverse influences on global environment, and is stabilized and not decomposed.

The solvent composition of the present invention may, specifically, be used in a wide range of applications as e.g. cleaning solvents or coating solvents.

### BACKGROUND ART

In production of e.g. IC, an electronic component, a precision machinery component or an optical component, components are cleaned with a cleaning solvent in e.g. a production step, an assembling step or a final finishing step so as to remove flux, processing oil, wax, a releasing agent or dust attached to the components. Further, as a method for producing an article having a coating film containing an organic chemical substance such as a lubricant, for example, a method has been known in which a solution having such an organic chemical substance dissolved in a coating solvent is prepared, the solution is applied to an object to be coated and then the coating solvent is evaporated to form a coating film. The coating solvent is required to be capable of sufficiently dissolving an organic chemical substance and to have a sufficient drying property.

As a solvent to be used for such applications, a fluorinated solvent containing e.g. a chlorofluorocarbon (hereinafter referred to as "CFC") such as 1,1,2-trichloro-1,2,2-trifluoroethane or a hydrochlorofluorocarbon (hereinafter referred to as "HCFC") such as 2,2-dichloro-1,1,1-trifluoroethane, 1,1-dichloro-1-fluoroethane, 3,3-dichloro-1,1,1,2,2-pentafluoropropane or 1,3-dichloro-1,1,2,2,3-pentafluoropropane has been used since such a fluorinated solvent is non-combustible and is less toxic, is excellent in stability, is unlikely to erode a base material such as metal, plastic or elastomer, and is excellent in chemical and thermal stability.

However, CFCs which are chemically very stable have a long life in the troposphere after vaporization and are diffused and reach even the stratosphere. Accordingly, the CFCs which reached the stratosphere are decomposed by ultraviolet light to form chlorine radicals, thus leading to destruction of the ozone layer. Thus, production of CFCs is globally restricted, and their production is totally abolished in advanced countries.

Further, HCFCs also have chlorine atoms and impair the ozone layer slightly though, and accordingly their production is to be totally abolished in 2020 in advanced countries.

On the other hand, as a solvent which has no chlorine atom and which will not impair the ozone layer, a perfluorocarbon (hereinafter referred to as "PFC") has been known. Further, as an alternative solvent to the CFCs and the HCFCs, a hydrofluorocarbon (hereinafter referred to as "HFC"), a hydrofluoroether (hereinafter referred to as "HFE"), etc. have been developed.

However, the HFCs and the PFCs are substances to be controlled by the Kyoto Protocol for prevention of global warming.

As a new alternative solvent to solvents such as HFCs, HFEs and PFCs, a fluoroolefin having a double bond between carbon atoms has been proposed. Such a fluoroolefin is easily decomposed and thereby has a short lifetime in the atmosphere, and thereby has small ozone depletion potential and global warming potential, such being excellent in that the global environment is less influenced. However, on the other hand, since such a fluoroolefin is easily decomposed, it is inferior in stability, and when used as a cleaning solvent or a coating solvent, it tends to be decomposed and acidified during use.

In order to solve this problem, a technique for increasing the stability of a fluoroolefin having a double bond between carbon atoms is necessary. As a conventional technique for stabilizing a fluorinated solvent containing no double bond, common stabilizers are disclosed (Patent Documents 1, 2 and 3). Further, techniques for stabilizing a fluoroolefin having a double bond between carbon atoms are also exemplified (Patent Documents 4, 5 and 6), but such techniques are not a technique for stabilizing any fluoroolefins, and such stabilization techniques are different depending upon the type of fluoroolefin.

### PRIOR ART DOCUMENTS

### PATENT DOCUMENTS

Patent Document 1: JP-A-11-293285
Patent Document 2: Japanese Patent No. 4,292,348
Patent Document 3: JP-A-2008-505212
Patent Document 4: JP-A-2008-531836
Patent Document 5: WO2010/098451
Patent Document 6: JP-A-2010-531924

### DISCLOSURE OF INVENTION

### TECHNICAL PROBLEM

It is thus known that stabilization techniques are different depending upon the type of fluoroolefin, and even when the techniques described in the prior art documents are applied, it is unexpected whether or not an effect to stabilize 1,1-dichloro-2,3,3,3-tetrafluoro-1-propene is obtained. The present inventors have found a compound having an effect as a stabilizer to 1,1-dichloro-2,3,3,3-tetrafluoro-1-propene as a fluoroolefin. As a result, it is an object of the present invention to provide a stable solvent composition which provides an excellent solubility of various organic substances, has a sufficient drying property and has no adverse influences on global environment, and is stabilized and not decomposed.

### SOLUTION TO PROBLEM

The present inventors have conducted extensive studies on the following, and as a result they have accomplished the present invention. That is, the present invention provides the following.
1. A solvent composition comprising 1,1-dichloro-2,3,3,3-tetrafluoropropene, and at least one stabilizer selected from the group consisting of a phenol, an ether, an epoxide and an amine.
2. The solvent composition according to the above 1, wherein said stabilizer is contained in an amount of from 1 mass ppm to 10 mass%, to 1,1-dichloro-2,3,3,3-tetrafluoropropene.
3. The solvent composition according to the above 1 or 2, wherein 1,1-dichloro-2,3,3,3-tetrafluoropropene is contained in an amount of at least 80 mass%, to the solvent composition.
4. The solvent composition according to any one of the above 1 to 3, wherein the phenol is phenol, 1,2-benzenediol, 2,6-di-tert-butyl-4-methylphenol, 3-cresol, 2-isopropyl-5-methylphenol or 2-methoxyphenol.
5. The solvent composition according to any one of the above 1 to 4, wherein the phenol is contained in an amount of from 5 mass ppm to 5 mass%, to 1,1-dichloro-2,3,3,3-tetrafluoropropene.
6. The solvent composition according to any one of the above 1 to 5, wherein the ether is 1,4-dioxane, 1,3-dioxane, 1,3,5-trioxane, furan, 2-methylfuran or tetrahydrofuran.
7. The solvent composition according to any one of the above 1 to 6, wherein the ether is contained in an amount of from 0.01 mass% to 5 mass%, to 1,1-dichloro-2,3,3,3-tetrafluoropropene.
8. The solvent composition according to any one of the above 1 to 7, wherein the epoxide is 1,2-propylene oxide, 1,2-butylene oxide, 1,2-epoxy-3-phenoxypropane, butyl glycidyl ether or diethylene glycol diglycidyl ether.
9. The solvent composition according to any one of the above 1 to 8, wherein the epoxide is contained in an amount of from 0.01 mass% to 5 mass%, to 1,1-dichloro-2,3,3,3-tetrafluoropropene.
10. The solvent composition according to any one of the above 1 to 9, wherein the amine is pyrrole, N-methylpyrrole, 2-methylpyridine, n-propylamine, diisopropylamine, N-methylmorphiline or N-ethymorphiline.
11. The solvent composition according to any one of the above 1 to 10, wherein the amine is contained in an amount of from 5 mass ppm to 5 mass%, to 1,1-dichloro-2,3,3,3-tetrafluoropropene.
12. The solvent composition according to any one of the above 1 to 11, which contains at least two types of said stabilizer, wherein at least one of them is a stabilizer of a phenol, and at least one of them is said stabilizer other than a phenol.
13. A cleaning method comprising cleaning an object to be cleaned, with the solvent composition as defined in any one of the above 1 to 12.
14. The cleaning method according to Claim 13, wherein the object to be cleaned is clothing.
15. A method for forming a coating film of a lubricant, which comprises dissolving a lubricant in the solvent composition as defined in any one of the above 1 to 12, applying a resulting lubricant composition on an object to be coated, and evaporating the solvent composition to form a coating film of the lubricant.

### ADVANTAGEOUS EFFECTS OF INVENTION

The solvent composition of the present invention is a stabilized solvent composition which can be used without decomposition even when used as a cleaning solvent for cleaning components to remove flux, processing oil, wax, a releasing agent or dust attached to the components or even when used as a coating solvent to be applied on an article as diluted, such as a lubricant, in e.g. production steps of various components. In a case where the solvent composition of the present invention is used for cleaning clothing, resin components attached to clothing such as buttons, spangles or zippers are less influenced, and further it is possible to carry out cleaning of clothing while achieving excellent texture after the cleaning.

### DESCRIPTION OF EMBODIMENTS

The solvent composition of the present invention is a solvent composition comprising 1,1-dichloro-2,3,3,3-tetrafluoropropene (hereinafter referred to as "CFO-1214ya"), and at least one stabilizer selected from the group consisting of a phenol, an ether, an epoxide and an amine.

CFO-1214ya, which is a fluoroolefin having a double bond between carbon atoms, has a short lifetime in the atmosphere, and has small ozone depletion potential and global warming potential. Further, CFO-1214ya has a boiling point of about 46°C and is thereby excellent in drying property. Further, even when CFO-1214ya is boiled to be formed into a vapor, its temperature is about 46°C, and therefore CFO-1214ya is less likely to adversely influence even components which are easily influenced by heat, such as resin components. Further, CFO-1214ya has excellent performances such that it has no flash point, has low surface tension and low viscosity, is readily evaporated at room temperature. However, CFO-1214ya is inferior in the stability in the air, whereby it is decomposed and acidified within a few days when stored at room temperature.

The present inventors have conducted studies and as a result, have found that CFO-1214ya is stabilized by adding at least one stabilizer selected from the group consisting of a phenol, an ether, an epoxide and an amine, to CFO-1214ya.

The stabilizer in the present invention is at least one member selected from the group consisting of a phenol, an ether, an epoxide and an amine, which has an effect as a stabilizer for CFO-1214ya. Here, the effect as a stabilizer for CFO-1214ya is determined by the following stability test. To CFO-1214ya having a purity of at least 99 mass%, a compound (provided that a single compound) is added so that the concentration of the compound in the composition is 1 mass%, to prepare100 g of a formulation, and the formulation is stored at room temperature (from 21 to 23°C) for three days. pHs immediately after the preparation and after the storing for three days are respectively measured, and when the value of the following formula (the rate of pH change) is at most 20, the compound is judged to have the effect as a stabilizer for CFO-1214ya. Further, in the case of adding a compound which is not dissolved to a concentration in the composition of 1 mass%, to CFO-1214ya having a purity of at least 99.5 mass%, the test is carried out with an amount corresponding to the solubility of the compound.

The rate of pH change = (|pH immediately after preparation - pH after storing for three days |) × 100 / pH immediately after preparation

The stabilizer having an effect of stabilizing the solvent composition of the present invention has a rate of pH change of at most 20, preferably at most 10, more preferably at most 5, in the above-mentioned stability test.

With respect to the content of the stabilizer in the solvent composition of the present invention, the lower limit is preferably at least 1 mass ppm, more preferably at least 5 mass ppm, particularly preferably at least 10 mass ppm, to CFO-1214ya. The upper limit is preferably at most 10 mass%, more preferably at most 5 mass%, particularly preferably at most 1 mass%. If the lower limit of the content of the stabilizer is lower than the preferred range, no sufficient stabilizing effect may be obtained. Further, if the upper limit is higher than the preferred range, the stabilizing ability may no longer be improved even if it is further added, and further properties of CFO-1214ya such that it has low surface tension and low viscosity, has good permeability, and is easily evaporated even at room temperature, may be impaired.

It is considered that the four types of stabilizer in the present invention respectively have different actions for stabilization. Accordingly, it is more preferred to incorporate at least two types among the four types of stabilizer into the solvent composition of the present invention. For example, it is estimated that a phenol has an ability to suppress decomposition of CFO-1214ya by antioxidation action, and an amine has an ability to neutralize an acidic substance produced by decomposition thereby to suppress acceleration of decomposition of CFO-1214ya by the acidic substance. It is particularly preferred that the solvent composition of the present invention contains a phenol and at least one of the above stabilizers other than the phenol. Further, in a case where at least two types among the four types of stabilizer are contained, a plurality of each type of the stabilizer may be contained. For example, at least two types of amines may be contained.

The amount of CFO-1214ya contained in the solvent composition of the present invention is preferably at least 80 mass%, more preferably at least 90 mass%, to the solvent composition.

Hereinafter, the concentration of each stabilizer means a concentration at the time of single use of the stabilizer.

The phenol in the present invention means an aromatic hydroxy compound having at least one hydroxy group in an aromatic hydrocarbon nucleus. The aromatic hydroxy compound is preferably soluble in CFO-1214ya. The aromatic hydrocarbon nucleus is preferably a benzene nucleus. At least one substituent other than a hydrogen atom may be bonded to the aromatic hydrocarbon nucleus. The substituent may, for example, be a hydrocarbon group, an alkoxy group, an acyl group or a carbonyl group. Further, at least one hydrogen atom bonded to the aromatic hydrocarbon nucleus may be substituted with a halogen atom. The hydrocarbon group may, for example, be an alkyl group, an alkenyl group, an aromatic hydrocarbon group or an aralkyl group. Among them, the number of carbon atoms of an alkyl group, an alkenyl group, an alkoxy group, an acyl group or a carbonyl group is preferably at most 6, and the number of carbon atoms of an aromatic hydrocarbon group or an aralkyl group is preferably at most 10. The hydrocarbon group is preferably an alkyl group or an alkenyl group, particularly preferably an alkyl group. Further, it is preferred that an alkyl group or an alkoxy group is present at the ortho position relative to the hydroxy group of the aromatic hydrocarbon nucleus. The alkyl group at the ortho position is preferably a branched alkyl group such as a tertiary butyl group. In a case where two ortho positions are present, both positions may have alkyl groups respectively.

The phenol may, specifically, be phenol, 1,2-benzenediol, 1,3-benzenediol, 1,4-benzenediol, 1,3,5-benzenetriol, 2,6-di-tert-butyl-4-methylphenol, 2,4,6-tri-tert-butylphenol, 2-tert-butylphenol, 3-tert-butylphenol, 4-tert-butylphenol, 2,4-di-tert-butylphenol, 2,6-di-tert-butylphenol, 4,6-di-tert-butylphenol, 1-cresol, 2-cresol, 3-cresol, 2,3-dimethylphenol, 2,4-dimethylphenol, 2,5-dimethylphenol, 2,6-dimethylphenol, 2,3,6-trimethylphenol, 2,4,6-trimethylphenol, 2,5,6-trimethylphenol, 3-isopropylphenol, 2-isopropyl-5-methylphenol, 2-methoxyphenol, 3-methoxyphenol, 4-methoxyphenol, 2-ethoxyphenol, 3-ethoxyphenol, 4-ethoxyphenol, 2-propoxyphenol, 3-propoxyphenol, 4-propoxyphenol or tertiarybutylcatechol.

Among them, phenol, 1,2-benzendiol, 2,6-di-tert-butyl-4-methylphenol, 3-cresol, 2-isopropyl-5-methylphenol or 2-methoxyphenol is more preferred.

The concentration of the above phenol to be added is preferably from 1 mass ppm to 10 mass%, more preferably from 5 mass ppm to 5 mass%, furthermore preferably from 10 mass ppm to 1 mass%, to CFO-1214ya. When the concentration is lower than the preferred range, no sufficient stabilizing effect may be obtained. When the concentration is higher than the preferred range, the stabilizing ability may no longer be improved even if it is further added, and further properties of CFO-1214ya such that it has low surface tension and low viscosity, has good permeability, and is easily evaporated even at room temperature, may be impaired.

Further, the ether in the present invention means a chain ether having two hydrocarbon groups bonded to an oxygen atom, or a cyclic ether (other than an epoxy ring which is a 3-membered cyclic ether) having an oxygen atom as an atom constituting a ring. The number of etheric oxygen atoms in the chain ether or the cyclic ether may be two or more. The number of carbon atoms in the ether is preferably at most 12. Further, a carbon atom in hydrocarbon groups constituting the ether may have a substituent such as a hydrogen atom or a hydroxy group. However, an ether having an epoxy group is regarded as an epoxide.

The ether may, specifically, be dimethyl ether, diethyl ether, dipropyl ether, diisopropyl ether, dibutyl ether, dipentyl ether, diisopentyl ether, diallyl ether, ethyl methyl ether, ethyl propyl ether, ethyl isopropyl ether, ethyl isobutyl ether, ethyl isopentyl ether, ethyl vinyl ether, allyl ethyl ether, ethyl phenyl ether, ethyl naphthyl ether, ethyl propargyl ether, 1,4-dioxane, 1,3-dioxane, 1,3,5-trioxane, ethylene glycol monomethyl ether, ethylene glycol monobutyl ether, ethylene glycol monophenyl ether, ethylene glycol monobenzyl ether, ethylene glycol dimethyl ether, ethylene glycol diethyl ether, ethylene glycol diphenyl ether, diethylene glycol monomethyl ether, diethylene glycol monoethyl ether, dipropylene glycol methyl ether, anisole, anethole, trimethoxyethane, triethoxyethane, furan, 2-methylfuran or tetrahydrofuran.

As the ether, a 4- to 6- membered cyclic ether is preferred, and among them, 1,4-dioxane, 1,3-dioxane, 1,3,5-trioxane, furan, 2-methylfuran or tetrahydrofuran is preferred.

The concentration of the above ether to be added is preferably from 1 mass ppm to 10 mass%, more preferably from 10 mass ppm to 7 mass%, furthermore preferably from 0.01 mass% to 5 mass%, to CFO-1214ya. If the concentration is lower than the preferred range, no sufficient stabilizing effect may be obtained. If the concentration is higher than the preferred range, the stabilizing ability may no longer be improved even if it is further added, and further properties of CFO-1214ya such that it has low surface tension and low viscosity, has good permeability, and is easily evaporated even at room temperature, may be impaired.

Further, the epoxide in the present invention is a compound having at least one epoxy group as a 3-membered cyclic ether. The epoxide may have at least two epoxy groups per molecule, and may also have a substituent such as a halogen atom, an etheric oxygen atom or a hydroxy group. The number of carbon atoms of the epoxide is preferably at most 12.

The epoxide may, specifically, be 1,2-propylene oxide, 1,2-butylene oxide, 1,2-epoxy-3-phenoxypropane, butyl glycidyl ether, methyl glycidyl ether, ethyl glycidyl ether, butyl glycidyl ether, vinyl glycidyl ether, allyl glycidyl ether, diethylene glycol diglycidyl ether, epichlorohydrin, d-limonene oxide or I-limonene oxide. Among them, 1,2-propylene oxide, 1,2-butylene oxide or butyl glycidyl ether is preferred.

The concentration of the above epoxide to be added is preferably from 1 mass ppm to 10 mass%, more preferably from 10 mass ppm to 7 mass%, furthermore preferably from 0.01 mass% to 5 mass%, to CFO-1214ya. If the concentration is lower than the preferred range, no sufficient stabilizing effect may be obtained. If the concentration is higher than the preferred range, the stabilizing ability may no longer be improved even if it is further added, and further properties of CFO-1214ya such that it has low surface tension and low viscosity, has good permeability, and is easily evaporated even at room temperature, may be impaired.

Further, the amine in the present invention means a compound having at least one primary to tertiary amino group. Further, the amine may be a noncyclic amine or a cyclic amine (a cyclic compound in which a nitrogen atom in an amino acid is an atom constituting a ring). As a group bonded to a nitrogen atom of the secondary amino group or the tertiary amino group, an alkyl group or a hydroxy alkyl group having at most 6 carbon atoms is preferred. The noncyclic amine may be an aliphatic amine or an aromatic amine. The aliphatic amine may be a benzene nucleus-containing compound having at least one primary to tertiary amino group. The cyclic amine may be a 4- to 6- membered cyclic compound having from 1 to 3 nitrogen atoms constituting a ring. Further, the number of carbon atoms in the amine is preferably at most 16, more preferably at most 10.

The amine may, specifically, be methylamine, dimethylamine, trimethylamine, ethylamine, diethylamine, triethylamine, n-propylamine, di-n-propylamine, isopropylamine, diisopropylamine, butylamine, dibutylamine, tributylamine, isobutylamine, diisobutylamine, secondary-butylamine, tertiary-butylamine, pentylamine, dipentylamine, tripentylamine, hexylamine, 2-ethylhexylamine, allylamine, diallylamine, triallylamine, aniline, N-methylaniline, N,N-dimethylaniline, N,N-diethylaniline, pyridine, picoline, morpholine, N-methylmorpholine, benzylamine, dibenzylamine, α-methylbenzylamine, propylenediamine, diethylhydroxyamine, pyrrole, N-methylpyrrole, 2-methylpyridine, 3-methylpyridine, 4-methylpyridine, ethanolamine, diethanolamine, triethanolamine, propanolamine, dipropanolamine, isopropanolamine, diisopropanolamine, N-methylethanolamine, N,N-dimethylethanolamine, morpholine, N-methylmorpholine, N-ethylmorpholine, diphenylamine or ethylenediamine.

The amine is preferably an alkylamine or a cyclic amine, and among them, pyrrole, N-methylpyrrole, 2-methylpyridine, n-propylamine, diisopropylamine, N-methylmorpholine or N-ethylmorpholine is preferred.

The concentration of the above amine to be added is preferably from 1 mass ppm to 10 mass%, more preferably from 5 mass ppm to 5 mass%, furthermore preferably from 10 mass ppm to 1 mass%, to CFO-1214ya. If the concentration is lower than the preferred range, no sufficient stabilizing effect may be obtained. If the concentration is higher than the preferred range, the stabilizing ability may no longer be improved even if it is further added, and further properties of CFO-1214ya such that it has low surface tension and low viscosity, has good permeability, and is easily evaporated even at room temperature, may be impaired.

Further, in a case where the solvent composition of the present invention is in contact with copper or a copper alloy, a triazole may be incorporated so as to avoid corrosion of such a metal. The triazole is one selected from e.g. 2-(2'-hydroxy-5'-methyl-phenyl)benzotriazole, 2-(2'-hydroxy-3'-tert-butyl-5'-methylphenyl)-5-chlorobenzotriazole, 1,2,3-benzotriazole and 1-[(N,N-bis-2-ethylhexyl)aminomethyl]benzotriazole, and it is more preferably 1,2,3-benzotriazole. The concentration of the above triazole to be incorporated is preferably from 10 mass ppm to 1 mass% based on the entire solvent composition.

In the solvent composition of the present invention, a solvent (hereinafter referred to as "solvent (A)") soluble in CFO-1214ya, depending on various purposes such as further increase of solubility or control of the evaporation speed, may be contained, in addition to CFO-1214ya. Further, the solvent soluble in CFO-1214ya means a solvent which is uniformly soluble in CFO-1214ya without causing separation into two phases or turbidity by stirring at normal temperature (25°C) when mixed with CFO-1214ya so as to have a desired concentration.

The solvent (A) contained in the solvent composition of the present invention may be one type or at least two types.

The solvent (A) is preferably at least one solvent selected from the group consisting of a hydrocarbon, an alcohol, a ketone, an ether, an ester, a chlorocarbon, a HFC and a HFE.

Some of the stabilizers in the present invention may be used as the solvent (A) (for example, tetrahydrofuran). Such a stabilizer may be contained in the solvent composition of the present invention in an amount larger than an amount enough to exhibit the stabilizing effect. In such a case, the stabilizer added in an amount larger than an amount enough to exhibit the stabilizing effect is regarded as the solvent (A).

The hydrocarbon as the solvent (A) is preferably a hydrocarbon having at least 5 carbon atoms. So long as it is a hydrocarbon having at least 5 carbon atoms, it may be linear or cyclic, and further it may be a saturated hydrocarbon or an unsaturated hydrocarbon.

The hydrocarbon may, for example, be specifically n-pentane, 2-methylbutane, n-hexane, 2-methylpentane, 2,2-dimethylbutane, 2,3-dimethylbutane, n-heptane, 2-methylhexane, 3-methylhexane, 2,4-dimethylpentane, n-octane, 2-methylheptane, 3-methylheptane, 4-methylheptane, 2,2-dimethylhexane, 2,5-dimethylhexane, 3,3-dimethylhexane, 2-methyl-3-ethylpentane, 3-methyl-3-ethylpentane, 2,3,3-trimethylpentane, 2,3,4-trimethylpentane, 2,2,3-trimethylpentane, 2-methylheptane, 2,2,4-trimethylpentane, n-nonane, 2,2,5-trimethylhexane, n-decane, n-dodecane, 2-methyl-2-butene, 1-pentene, 2-pentene, 1-hexene, 1-octene, 1-nonene, 1-decene, cyclopentane, methylcyclopentane, cyclohexane, methylcyclohexane, ethylcyclohexane, bicyclohexane, cyclohexene, α-pinene, dipentene, decalin, tetralin or amylnaphthalene. Among them, n-pentane, cyclopentane, n-hexane, cyclohexane or n-heptane is more preferred.

The alcohol as the solvent (A) is preferably C₁₋₁₆ alcohol. So long as it is a C₁₋₁₆ alcohol, it may be linear or cyclic, and further it may be a saturated alcohol or an unsaturated alcohol.

The alcohol may, for example, be specifically methanol, ethanol, n-propyl alcohol, isopropyl alcohol, n-butyl alcohol, sec-butyl alcohol, isobutyl alcohol, tert-butyl alcohol, 1-pentanol, 2-pentanol, 1-ethyl-1-propanol, 2-methyl-1-butanol, 3-methyl-1-butanol, 3-methyl-2-butanol, neopentyl alcohol, 1-hexanol, 2-methyl-1-pentanol, 4-methyl-2-pentanol, 2-ethyl-1-butanol, 1-heptanol, 2-heptanol, 3-heptanol, 1-octanol, 2-octanol, 2-ethyl-1-hexanol, 1-nonanol, 3,5,5-trimethyl-1-hexanol, 1-decanol, 1-undecanol, 1-dodecanol, allyl alcohol, propargyl alcohol, benzyl alcohol, cyclohexanol, 1-methylcyclohexanol, 2-methylcyclohexanol, 3-methylcyclohexanol, 4-methylcyclohexanol, α-terpineol, 2,6-dimethyl-4-heptanol, nonyl alcohol or tetradecyl alcohol. Among them, methanol, ethanol or isopropyl alcohol is more preferred.

The ketone as the solvent (A) is preferably a C₃₋₉ ketone. So long as it is a C₃₋₉ ketone, it may be linear or cyclic, and further it may be a saturated ketone or an unsaturated ketone.

The ketone may, for example, be specifically acetone, methyl ethyl ketone, 2-pentanone, 3-pentanone, 2-hexanone, methyl isobutyl ketone, 2-heptanone, 3-heptanone, 4-heptanone, diisobutyl ketone, mesityl oxide, phorone, 2-octanone, cyclohexanone, methylcyclohexanone, isophorone, 2,4-pentanedione, 2,5-hexanedione, diacetone alcohol or acetophenone. Among them, acetone or methyl ethyl ketone is more preferred.

The ether as the solvent (A) is preferably a C₂₋₈ ether. So long as it is a C₂₋₈ ether, it may be linear or cyclic, and further it may be a saturated ether or an unsaturated ether.

The ether may, for example, be specifically diethyl ether, dipropyl ether, diisopropyl ether, dibutyl ether, ethyl vinyl ether, butyl vinyl ether, anisole, phenetole, methyl anisole, furan, methylfuran or tetrahydrofuran. Among them, diethyl ether, diisopropyl ether or tetrahydrofuran is more preferred.

The ester as the solvent (A) is preferably a C₂₋₁₉ ester. So long as it is a C₂₋₁₉ ester, it may be linear or cyclic, and further it may be a saturated ester or an unsaturated ester.

The ester may, for example, be specifically methyl formate, ethyl formate, propyl formate, butyl formate, isobutyl formate, pentyl formate, methyl acetate, ethyl acetate, propyl acetate, isopropyl acetate, butyl acetate, isobutyl acetate, sec-butyl acetate, pentyl acetate, methoxybutyl acetate, sec-hexyl acetate, 2-ethylbutyl acetate, 2-ethylhexyl acetate, cyclohexyl acetate, benzyl acetate, methyl propionate, ethyl propionate, butyl propionate, methyl butyrate, ethyl butyrate, butyl butyrate, isobutyl isobutyrate, ethyl 2-hydroxy-2-methyl propionate, methyl benzoate, ethyl benzoate, propyl benzoate, butyl benzoate, benzyl benzoate, γ-butyrolactone, diethyl oxalate, dibutyl oxalate, dipentyl oxalate, diethyl malonate, dimethyl maleate, diethyl maleate, dibutyl maleate, dibutyl tartrate, tributyl citrate, dibutyl sebacate, dimethyl phthalate, diethyl phthalate or dibutyl phthalate. Among them, methyl acetate or ethyl acetate is more preferred.

The chlorocarbon as the solvent (A) is preferably a C₁₋₃ chlorocarbon. So long as it is a C₁₋₃ chlorocarbon, it may be linear or cyclic, and further it may be a saturated chlorocarbon or an unsaturated chlorocarbon.

It may, for example, be specifically methylene chloride, 1,1-dichloroethane, 1,2-dichloroethane, 1,1,2-trichloroethane, 1,1,1,2-tetrachloroethane, 1,1,2,2-tetrachloroethane, pentachloroethane, 1,1-dichloroethylene, cis-1,2-dichloroethylene, trans-1,2-dichloroethylene, trichloroethylene, tetrachloroethylene or 1,2-dichloropropane. Among them, methylene chloride, trans-1,2-dichloroethylene or trichloroethylene is more preferred.

The HFC as the solvent (A) is preferably a C₄₋₈ linear or cyclic HFC, more preferably a solvent included in a HFC having a number of fluorine atoms per molecule equal to or larger than the number of hydrogen atoms.

It may, for example, be specifically 1,1,1,3,3-pentafluorobutane, 1,1,1,2,2,3,4,5,5,5-decafluoropentane, 1,1,2,2,3,3,4-heptafluorocyclopentane, 1,1,1,2,2,3,3,4,4-nonafluorohexane, 1,1,1,2,2,3,3,4,4,5,5,6,6-tridecafluorohexane or 1,1,1,2,2,3,3,4,4,5,5,6,6-tridecafluorooctane. Among them, 1,1,1,2,2,3,4,5,5,5-decafluoropentane, 1,1,1,2,2,3,3,4,4-nonafluorohexane or 1,1,1,2,2,3,3,4,4,5,5,6,6-tridecafluorohexane is more preferred.

The HFE as the solvent (A) may, for example, be (perfluorobutoxy)methane, (perfluorobutoxy)ethane or 1,1,2,2-tetrafluoro-1-(2,2,2-trifluoroethoxy)ethane. Among them, (perfluorobutoxy)methane or 1,1,2,2-tetrafluoro-1-(2,2,2-trifluoroethoxy)ethane is preferred.

The solvent (A) is further preferably a solvent having no flash point. The solvent (A) having no flash point may, for example, be a HFC such as 1,1,1,2,2,3,4,5,5,5-decafluoropentane, 1,1,1,2,2,3,3,4,4-nonafluorohexane or 1,1,1,2,2,3,3,4,4,5,5,6,6-tridecafluorohexane, or a HFE such as (perfluorobutoxy)methane or 1,1,2,2-tetrafluoro-1-(2,2,2-trifluoroethoxy)ethane. Even when a solvent having a flash point is used as the solvent (A), it is preferred to use it as mixed with CFO-1214ya within a range where the solvent composition of the present invention has no flash point.

Further, in a case where CFO-1214ya and the solvent (A) forms an azeotropic composition, the azeotropic composition may be used.

In a case where the solvent composition of the present invention contains the solvent (A), the content of the solvent (A) in the solvent composition of the present invention is preferably from 0.1 to 50 parts by mass, more preferably from 0.5 to 20 parts by mass, furthermore preferably from 1 to 10 parts by mass, per 100 parts by mass of the total amount of CFO-1214ya and the solvent (A).

When the content of the solvent (A) is at least the above lower limit value, it is possible to sufficiently obtain the effect exhibited by the solvent (A). When the content of the solvent (A) is at most the above upper limit value, the excellent drying property of CFO-1214ya is not disturbed.

The solvent composition of the present invention as explained above is a stable solvent composition which provides an excellent solubility of various organic substances, which has a sufficient drying property and has no adverse influences on global environment, and which is stabilized and not decomposed.

The solvent composition of the present invention can be used without having adverse influence on objects to be contacted made of a material in a wide range, such as metal, plastic, elastomer, glass or ceramics.

The solvent composition of the present invention is especially suitable as a cleaning solvent for cleaning an object to be cleaned or a coating solvent for applying e.g. a lubricant on an object to be coated.

Cleaning applications employing the solvent composition of the present invention may, for example, be cleaning and removal of flux, processing oil, wax, a releasing agent or dust attached to a variety of objects to be cleaned such as IC, an electronic component, a precise machinery component or an optical component. Further, the solvent composition of the present invention may be used for cleaning various objects to be cleaned, such as metal, a resin, a rubber, a fiber and composite materials thereof.

Further, the solvent composition of the present invention may be used for cleaning various clothing composed of natural fiber clothes or synthetic fiber clothes so as to remove soils.

A method of cleaning an object to be cleaned, with the solvent composition of the present invention, is not particularly limited so long as the solvent composition of the present invention is used. For example, manual cleaning, dip cleaning, spray cleaning, dip osculating cleaning, dip ultrasonic cleaning, vapor cleaning or a combination thereof may be employed. It is possible to properly select a cleaning apparatus and cleaning conditions etc., and the solvent composition of the present invention may be repeatedly used for a long period without being decomposed.

The solvent composition of the present invention is suitable as a cleaning solvent for clothing, that is a dry cleaning solvent.

Dry cleaning applications employing the solvent composition of the present invention, may be cleaning and removal of soils attached to clothing such as a shirt, a sweater, a jacket, a skirt, pants, a jacket, gloves, a muffler or a stole.

Further, the solvent composition of the present invention may be used for dry cleaning of clothing made of fibers such as cotton, hemp, wool, rayon, polyester, acryl or nylon, or clothing having components such as metals, buttons or zippers, or decorating articles such as spangles attached thereto.

As conventional dry cleaning solvents, a petroleum solvent, perchloroethylene, and a fluorinated solvent such as a HCFC, a HFC or a HFE are used. Among them, since a fluorinated solvent is non-combustible and is excellent in texture at the time of finishing, a HCFC such as HCFC-225, a HFC such as HFC-365mfc or HFC-43-10 mee, or a HFE such as HFE-449sf, HFE-569sf or HFE-347pc-f is used for dry cleaning with a fluorinated solvent.

However, the above fluorinated solvent has been known to have an influence on e.g. components such as buttons, decorating articles such as spangles, clothes processed with urethane, or picture pattern printed portions of clothing.

The influence on buttons may be discoloration, cracking or deformation. As buttons which are susceptible to the influence, resin-made buttons are mentioned. Among them, one made of an acryl resin is susceptible to discoloration, deformation or cracking, and therefore attention should be paid in the dry cleaning. Also known is an influence on back shank buttons among the resin-made buttons having various shapes. The back shank button is a button which has a hole to run a thread on the clothing side, and may, for example, be a back hole type or an arch type. The back shank button may be further classified depending on the way of attaching the back shank. The back shank button may be an adhesion type where a back shank is connected to another component of the button by adhesion, or a one push type where a back shank is connected and fixed to a component of the button through a hole. In the case of such a back shank button, stress during processing may remain in the resin portion of the back shank, whereby e.g. cracking tends to occur at the time of dry cleaning. In order to avoid such an influence, steps of removing resin-made buttons before dry cleaning treatment and attaching them after the dry cleaning are required, and there is a need of a solvent having less influence on the resin.

Further, in the case of clothing decorated with spangles, peeling of the spangles may occur by dry cleaning when the spangles are attached to the clothing with an adhesive, as well as discoloration of a resin material of the spangles. In the case of clothing of clothes processed with urethane or picture pattern-printed clothing, discoloration of the clothes processed with urethane or the printed portion and deterioration of a resin tend to occur due to dry cleaning.

CFO-1214ya as a main component of the solvent composition of the present invention has less influences on a resin material such as an acryl resin, than conventional dry cleaning solvents, and thus has more excellent performance than conventional dry cleaning fluorinated solvents having an influence on buttons or spangle materials.

Further, CFO-1214ya contained in the solvent composition of the present invention contains chlorine atoms in its molecule, and thereby provides high solubility of soils, and therefore it is found that CFO-1214ya has a cleaning performance to oil soils at the same level as a CFC such as CFC-113 having a wide range of solvency and a small influence on materials.

Moreover, in a case where the solvent composition of the present invention is used as a dry cleaning solvent, a soap may be blended therein so as to increase a removing performance of water-soluble soils such as sweat or mud. The soap means a surfactant to be used for dry cleaning, and it is preferred to use a cationic, nonionic, anionic or amphoteric surfactant. It is found that CFO-1214ya has chlorine atoms in its molecule and thereby provides wide solubility of various organic compounds, and therefore it is not necessary to optimize a soap depending on a solvent, as a HFE or a HFC, and various soaps may be used. The solvent composition of the present invention thus may contain at least one surfactant selected from the group consisting of cationic, nonionic, anionic and amphoteric surfactants.

A specific example of the soap may be, as a cationic surfactant, a quaternary ammonium salt such as dodecyldimethylammonium chloride or trimethylammonium chloride; as a nonionic surfactant, a polyoxyalkylene nonyl phenyl ether, a polyoxyalkylene alkyl ether, a fatty acid alkanolamide, a glycerin fatty acid ester, a sorbitan fatty acid ester, a sucrose fatty acid ester, a propylene glycol fatty acid ester, or an ester of phosphoric acid and an aliphatic acid; as an anionic surfactant, an alkyl sulfate such as a polyoxyethylene alkyl sulfate, a carboxylate such as a fatty acid salt (soap), or a sulfonate such α-olefin sulfonate or lauryl sulfonate; or as an amphoteric surfactant, a betaine compound such as an alkyl betaine.

The proportion of the soap in the dry cleaning solvent composition is from 0.01 to 10 mass%, preferably from 0.1 to 5 mass%, more preferably from 0.2 to 2 mass%.

Furthermore, in a case where the solvent composition of the present invention is used as a coating solvent of e.g. a lubricant, the lubricant is dissolved in the solvent composition of the present invention to prepare a lubricant solution, the resulting lubricant solution is applied on an object to be coated, and the solvent composition is evaporated to form a coating film of the lubricant on the object to be coated.

Like the coating solvent of a lubricant, a solution having an anti-corrosive agent dissolved in the solvent composition of the present invention may be applied on an object to be coated, and the solvent composition of the present invention may be evaporated to form a coating film of the anti-corrosive agent on the object to be coated.

As the object to be coated with the lubricant or the anti-corrosive agent, an object to be coated made of a wide variety of material, such as metal, plastic, elastomer, glass or ceramics, may be employed.

Either the solvent composition of the present invention before dissolving the lubricant or the anti-corrosive agent or the above solution may be used without being decomposed during its storage or use.

A lubricant means one to be used to reduce friction on the contact surface and to prevent generation of heat and damages by abrasion when two members are moved in a state where their surfaces are in contact with each other. The lubricant may be in any state of a liquid (oil), a semi-solid (grease) and a solid.

The lubricant is preferably a fluorinated lubricant or a silicone lubricant in view of excellent solubility in CFO-1214ya. A fluorinated lubricant means a lubricant having fluorine atoms in its molecule. Further, a silicone lubricant means a lubricant containing silicone.

The lubricant contained in the lubricant solution may be one type or at least two types. Each of the fluorinated lubricant and the silicone lubricant may be used alone or in combination.

The content of the lubricant in the above lubricant solution (100 mass%) is preferably from 0.01 to 50 mass%, more preferably from 0.05 to 30 mass%, further preferably from 0.1 to 20 mass%. When the content of the lubricant is within the above range, the film thickness of the coating film when the lubricant solution is applied, and the thickness of the lubricant coating film after drying are readily adjusted within proper ranges. Likewise, it is preferred that the content of the anti-corrosive agent in the anti-corrosive agent solution is within the same range as the above.

The solvent composition of the present invention as mentioned above has a short lifetime in the atmosphere, provides excellent solubility, and further has no adverse influences on the global environment, and is stabilized and not decomposed.

### EXAMPLES

### 1. Stability test

To CFO-1214ya having a purity of 99.9 mass%, a stabilizer shown in each of Tables 1 to 8 was added to prepare 100 g of a formulation, and the formulation was stored at room temperature (from 21 to 23°C) for three days. Measurement results of pHs immediately after preparation and after storing are shown in Tables 1 to 8.

pH measurement was carried out in such a manner that 40 g of a solution of each formulation and 40 g of pure water controlled to pH 7 were charged into a 200 ml separatory funnel, followed by shaking for one minute, then left to stand thereby to separate into two phases, and an aqueous phase as the upper layer was collected and the pH of the aqueous phase was measured by means of a pH meter (model number: HM-30R, manufactured by DKK-TOA CORPORATION).

Ex. shown in Tables 1 to 7 are such that Ex. 2 to 115 and 122 to 126 are Examples of the present invention, and Ex. 1 and 116 to 120 are Comparative Examples. Examples show stabilization effects of the single use of phenols in Table 1, ethers in Table 2, epoxides in Table 3 and amines in Table 4. Further, Examples in Tables 5 to 7 show stabilization effects of a case where at least two types of stabilizers were combined. From the results, it was shown that CFO-1214ya was stabilized by the solvent composition of the present invention in each of Tables 1 to 7.

On the other hand, in Table 8, among compounds commonly known as stabilizers or additives, substances having no stabilization effect on CFO-1214ya were tested. The test was carried out in the same manner as in Examples in Tables 1 to 7 except that the respective compounds were added so as to have a concentration of 1 mass% in the composition. However, none of the substances shown in Table 8 showed stabilization effects.

**[Table 1]**

| Ex. | Stabilizer (Concentration) | pH | |
|---|---|---|---|
| | | Immediately after preparation | After three days |
| 1 | Nil | 7.0 | 2.0 |
| 2 | Phenol (1 mass ppm) | 7.2 | 3.5 |
| 3 | Phenol (10 mass ppm) | 7.1 | 7.1 |
| 4 | Phenol (5 mass%) | 7.3 | 7.2 |
| 5 | 1,2-Benzenediol (1 mass ppm) | 7.0 | 3.1 |
| 6 | 1,2-Benzenediol (10 mass ppm) | 7.1 | 7.1 |
| 7 | 1,2-Benzenediol (5 mass%) | 7.2 | 7.2 |
| 8 | 2,6-Di-tert-butyl-4-methylphenol (1 mass ppm) | 7.0 | 3.2 |
| 9 | 2,6-Di-tert-butyl-4-methylphenol (10 mass ppm) | 7.0 | 7.0 |
| 10 | 2,6-Di-tert-butyl-4-methylphenol (0.1 mass%) | 7.1 | 7.1 |
| 11 | 2,6-Di-tert-butyl-4-methylphenol (5 mass%) | 7.2 | 7.1 |
| 12 | 3-Cresol (1 mass ppm) | 7.2 | 3.4 |
| 13 | 3-Cresol (10 mass ppm) | 7.1 | 7.1 |
| 14 | 3-Cresol (5 mass%) | 7.2 | 7.2 |
| 15 | 2-Isopropyl-5-methylphenol (1 mass ppm) | 7.1 | 3.4 |
| 16 | 2-Isopropyl-5-methylphenol (10 mass ppm) | 7.2 | 7.1 |
| 17 | 2-Isopropyl-5-methylphenol (5 mass%) | 7.1 | 7.1 |
| 18 | 2-Methoxyphenol (1 mass ppm) | 7.1 | 3.3 |
| 19 | 2-Methoxyphenol (10 mass ppm) | 7.0 | 7.0 |
| 20 | 2-Methoxyphenol (5 mass%) | 7.2 | 7.1 |

**[Table 2]**

| Ex. | Stabilizer (Concentration) | pH | |
|---|---|---|---|
| | | Immediately after preparation | After three days |
| 1 | Nil | 7.0 | 2.0 |
| 21 | 1,4-Dioxane (10 mass ppm) | 7.3 | 3.4 |
| 22 | 1,4-Dioxane (100 mass ppm) | 7.1 | 5.2 |
| 23 | 1,4-Dioxane (0.1 mass%) | 7.2 | 6.8 |
| 24 | 1,4-Dioxane (5 mass%) | 7.1 | 7.1 |
| 25 | 1,3-Dioxane (10 mass ppm) | 7.1 | 3.1 |
| 26 | 1,3-Dioxane (1 mass%) | 7.1 | 7.1 |
| 27 | 1,3,5-Trioxane (10 mass ppm) | 7.1 | 3.2 |
| 28 | 1,3,5-Trioxane (0.1 mass%) | 7.1 | 6.8 |
| 29 | 1,3,5-Trioxane (5 mass%) | 7.1 | 7.0 |
| 30 | Furan (10 mass ppm) | 7.1 | 5.7 |
| 31 | Furan (100 mass ppm) | 7.2 | 7.1 |
| 32 | Furan (5 mass%) | 7.2 | 7.2 |
| 33 | 2-Methylfuran (10 mass ppm) | 7.2 | 5.6 |
| 34 | 2-Methylfuran (100 mass ppm) | 7.1 | 7.1 |
| 35 | Tetrahydrofuran (10 mass ppm) | 7.1 | 3.6 |
| 36 | Tetrahydrofuran (1 mass%) | 7.2 | 7.1 |
| 37 | Tetrahydrofuran (5 mass%) | 7.1 | 7.1 |
| 38 | Ethyl phenyl ether (100 ppm) | 7.2 | 7.2 |
| 39 | Ethyl phenyl ether (1 mass%) | 7.2 | 7.2 |
| 40 | Diethylene glycol monoethyl ether (100 ppm) | 7.2 | 7.2 |

**[Table 3]**

| Ex. | Stabilizer (Concentration) | pH | |
|---|---|---|---|
| | | Immediately after preparation | After three days |
| 1 | Nil | 7.0 | 2.0 |
| 41 | 1,2-Propylene oxide (10 mass ppm) | 7.2 | 3.2 |
| 42 | 1,2-Propylene oxide (100 mass ppm) | 7.2 | 4.8 |
| 43 | 1,2-Propylene oxide (1 mass%) | 7.1 | 7.0 |
| 44 | 1,2-Butylene oxide (10 mass ppm) | 7.0 | 3.8 |
| 45 | 1,2-Butylene oxide (100 mass ppm) | 7.1 | 5.8 |
| 46 | 1,2-Butylene oxide (0.1 mass%) | 7.2 | 6.8 |
| 47 | 1,2-Butylene oxide (5 mass%) | 7.2 | 7.2 |
| 48 | 1,2-Epoxy-3-phenoxypropane (10 mass ppm) | 7.2 | 5.3 |
| 49 | 1,2-Epoxy-3-phenoxypropane (100 mass ppm) | 7.2 | 7.1 |
| 50 | 1,2-Epoxy-3-phenoxypropane (5 mass%) | 7.2 | 7.2 |
| 51 | Butyl glycidyl ether (10 mass ppm) | 7.1 | 3.3 |
| 52 | Butyl glycidyl ether (0.1 mass%) | 7.2 | 6.9 |
| 53 | Butyl glycidyl ether (5 mass%) | 7.1 | 7.1 |
| 54 | Diethylene glycol diglycidyl ether (10 mass ppm) | 7.2 | 3.7 |
| 55 | Diethylene glycol diglycidyl ether (0.1 mass%) | 7.0 | 6.9 |
| 56 | Diethylene glycol diglycidyl ether (5 mass%) | 7.1 | 7.1 |

**[Table 4]**

| Ex. | Stabilizer (Concentration) | pH | |
|---|---|---|---|
| | | Immediately after preparation | After three days |
| 1 | Nil | 7.0 | 2.0 |
| 57 | Pyrrole (1 mass ppm) | 7.2 | 3.4 |
| 58 | Pyrrole (10 mass ppm) | 7.0 | 7.0 |
| 59 | Pyrrole (5 mass%) | 7.2 | 7.2 |
| 60 | N-Methylpyrrole (1 mas ppm) | 7.1 | 3.3 |
| 61 | N-Methylpyrrole (10 mass ppm) | 7.0 | 7.0 |
| 62 | N-Methylpyrrole (0.1 mass%) | 7.1 | 7.1 |
| 63 | N-Methylpyrrole (5 mass%) | 7.1 | 7.1 |
| 64 | 2-Methylpyridine (1 mass ppm) | 7.2 | 3.2 |
| 65 | 2-Methylpyridine (0.1 mass%) | 7.4 | 7.3 |
| 66 | 2-Methylpyridine (5 mass%) | 7.8 | 7.8 |
| 67 | n-Propylamine (1 mass ppm) | 7.3 | 3.1 |
| 68 | n-Propylamine (50 mass ppm) | 7.2 | 6.8 |
| 69 | n-Propylamine (5 mass%) | 11.8 | 11.8 |
| 70 | Diisopropylamine (1 mass ppm) | 7.2 | 4.1 |
| 71 | Diisopropylamine (10 mass ppm) | 7.5 | 7.4 |
| 72 | Diisopropylamine (0.1 mass%) | 9.8 | 9.8 |
| 73 | Diisopropylamine (5 mass%) | 11.2 | 11.2 |
| 74 | N-Methylmorpholine (1 mass ppm) | 7.3 | 3.4 |
| 75 | N-Methylmorpholine (50 mass ppm) | 7.4 | 7.4 |
| 76 | N-Ethylmorpholine (1 mass ppm) | 7.3 | 3.0 |
| 77 | N-Ethylmorpholine (50 mass ppm) | 7.4 | 7.4 |
| 78 | N-Ethylmorpholine (5 mass%) | 10.2 | 10.2 |

**[Table 5]**

| Ex. | Stabilizer (Concentration) | pH | |
|---|---|---|---|
| | | Immediately after preparation | After three days |
| 1 | Nil | 7.0 | 2.0 |
| 79 | 2,6-Di-tert-butyl-4-methylphenol (1 mass ppm) | 7.1 | 4.1 |
| | 1,4-Dioxane (10 mass ppm) | | |
| 80 | 2,6-Di-tert-butyl-4-methylphenol (1 mass ppm) | 7.3 | 7.3 |
| | 1,4-Dioxane (1 mass%) | | |
| 81 | 2,6-Di-tert-butyl-4-methylphenol (1 mass ppm) | 7.2 | 7.1 |
| | 1,3,5-Trioxane (1 mass%) | | |
| 82 | 2,6-Di-tert-butyl-4-methylphenol (10 mass ppm) | 7.3 | 7.3 |
| | 1,4-Dioxane (10 mass ppm) | | |
| 83 | 2,6-Di-tert-butyl-4-methylphenol (10 mass ppm) | 7.3 | 7.3 |
| | 1,4-Dioxane (100 mass ppm) | | |
| 84 | 2,6-Di-tert-butyl-4-methylphenol (10 mass ppm) | 7.1 | 7.1 |
| | Tetrahydrofuran (100 mass ppm) | | |
| 85 | 2,6-Di-tert-butyl-4-methylphenol (1 mass ppm) | 7.1 | 4.3 |
| | 1,2-Epoxy-3-phenoxypropane (10 mass ppm) | | |
| 86 | 2,6-Di-tert-butyl-4-methylphenol (1 mass ppm) | 7.3 | 7.2 |
| | 1,2-Epoxy-3-phenoxypropane (100 mass ppm) | | |
| 87 | 2,6-Di-tert-butyl-4-methylphenol (1 mass ppm) | 7.2 | 7.2 |
| | Diethylene glycol diglycidyl ether (1 mass%) | | |
| 88 | 2,6-Di-tert-butyl-4-methylphenol (10 mass ppm) | 7.2 | 7.2 |
| | 1,2-Epoxy-3-phenoxypropane (10 mass ppm) | | |
| 89 | 2,6-Di-tert-butyl-4-methylphenol (10 mass ppm) | 7.2 | 7.2 |
| | 1,2-Epoxy-3-phenoxypropane (100 mass ppm) | | |
| 90 | 2,6-Di-tert-butyl-4-methylphenol (10 mass ppm) | 7.2 | 7.2 |
| | 1,2-Propylene oxide (100 mass ppm) | | |

**[Table 6]**

| Ex. | Stabilizer (Concentration) | pH | |
|---|---|---|---|
| | | Immediately after preparation | After three days |
| 1 | Nil | 7.0 | 2.0 |
| 91 | 2,6-Di-tert-butyl-4-methylphenol (10 mass ppm) | 7.3 | 7.3 |
| | 1,2-Butylene oxide (100 mass ppm) | | |
| 92 | 2,6-Di-tert-butyl-4-methylphenol (1 mass ppm) | 7.3 | 4.2 |
| | N-Methylpyrrole (1 mass ppm) | | |
| 93 | 2,6-Di-tert-butyl-4-methylphenol (10 mass ppm) | 7.2 | 7.2 |
| | N-Methylpyrrole (1 mass ppm) | | |
| 94 | 2,6-Di-tert-butyl-4-methylphenol (1 mass ppm) | 7.3 | 7.3 |
| | N-Methylpyrrole (10 mass ppm) | | |
| 95 | 2,6-Di-tert-butyl-4-methylphenol (10 mass ppm) | 7.2 | 7.2 |
| | N-Methylpyrrole (10 mass ppm) | | |
| 96 | 2,6-Di-tert-butyl-4-methylphenol (0.1 mass%) | 7.1 | 7.1 |
| | N-Methylpyrrole (0.1 mass%) | | |
| 97 | 2,6-Di-tert-butyl-4-methylphenol (10 mass ppm) | 7.4 | 7.4 |
| | N-Methylmorpholine (50 mass ppm) | | |
| 98 | 1,4-Dioxane (10 mass ppm) | 7.0 | 3.8 |
| | 1,2-Propylene oxide (10 mass ppm) | | |
| 99 | 1,4-Dioxane (10 mass ppm) | 7.1 | 3.9 |
| | 1,2-Butylene oxide (10 mass ppm) | | |
| 100 | 1,4-Dioxane (10 mass ppm) | 7.2 | 7.2 |
| | 1,2-Epoxy-3-phenoxypropane (100 mass ppm) | | |
| 101 | 1,4-Dioxane (10 mass ppm) | 7.1 | 7.1 |
| | 1,2-Butylene oxide (1 mass%) | | |
| 102 | 1,4-Dioxane (1 mass%) | 7.2 | 7.1 |
| | 1,2-Butylene oxide (10 mass ppm) | | |
| 3103 | 1,4-Dioxane (1 mass%) | 7.3 | 7.2 |
| | 1,2-Butylene oxide (1 mass%) | | |
| 104 | 1,4-Dioxane (10 mass ppm) | 7.1 | 4.5 |
| | N-Methylpyrrole (1 mass ppm) | | |
| 105 | 1,4-Dioxane (0.1 mass%) | 7.0 | 7.0 |
| | N-Methylpyrrole (1 mass ppm) | | |
| 106 | 1,4-Dioxane (0.1 mass%) | 7.1 | 7.1 |
| | N-Methylpyrrole (10 mass ppm) | | |

**[Table 7]**

| Ex. | Stabilizer (Concentration) | pH | |
|---|---|---|---|
| | | Immediately after preparation | After three days |
| 1 | Nil | 7.0 | 2.0 |
| 107 | 1,2-Butylene oxide (1 mass%) | 7.3 | 7.2 |
| | N-Methylpyrrole (1 mass ppm) | | |
| 108 | 1,2-Butylene oxide (10 mass ppm) | 7.3 | 7.3 |
| | N-Methylpyrrole (0.1 mass%) | | |
| 109 | 1,2-Butylene oxide (0.1 mass%) | 7.2 | 7.2 |
| | N-Methylpyrrole (0.1 mass%) | | |
| 110 | 2,6-Di-tert-butyl-4-methylphenol (10 mass ppm) | 7.3 | 7.3 |
| | 1,4-Dioxane (0.1 mass%) | | |
| | 1,2-Butylene oxide (0.1 mass%) | | |
| 111 | 2,6-Di-tert-butyl-4-methylphenol (10 mass ppm) | 7.2 | 7.2 |
| | 1,2-Butylene oxide (100 mass ppm) | | |
| | N-Methylpyrrole (10 mass ppm) | | |
| 112 | 2,6-Di-tert-butyl-4-methylphenol (0.1 mass%) | 7.2 | 7.2 |
| | 1,2-Butylene oxide (0.1 mass%) | | |
| | N-Methylpyrrole (0.1 mass%) | | |
| 113 | 2,6-Di-tert-butyl-4-methylphenol (10 mass ppm) | 7.6 | 7.6 |
| | 1,2-Butylene oxide (0.1 mass%) | | |
| | Diisopropylamine (50 mass ppm) | | |
| 114 | N-Methylpyrrole (50 mass ppm) | 7.3 | 7.2 |
| | 1,2-Butylene oxide (0.1 mass%) | | |
| | 1,4-Dioxane (0.1 mass%) | | |
| 115 | 2,6-Di-tert-butyl-4-methylphenol (10 mass ppm) | 7.6 | 7.6 |
| | 1,2-Butylene oxide (100 mass ppm) | | |
| | N-Methylpyrrole (50 mass ppm) | | |
| | Diisopropylamine (50 mass ppm) | | |

**[Table 8]**

| Ex. | Stabilizer (Concentration) | pH | |
|---|---|---|---|
| | | Immediately after preparation | After three days |
| 1 | Nil | 7.0 | 2.0 |
| 116 | 2-Methyl-2-butene (1 mass%) | 7.2 | 2.1 |
| 117 | Nitromethane (1 mass%) | 7.2 | 2.2 |
| 118 | Nitroethane (1 mass%) | 7.1 | 2.0 |
| 119 | Methanol (1 mass%) | 7.3 | 1.9 |
| 120 | Ethanol (1 mass%) | 7.2 | 2.1 |

To CFO-1214ya having a purity of 99.9 mass%, only a stabilizer shown in Table 9 was added to prepare 100 g of a formulation, and the formulation was stored at a boiling point (46°C) of CFO-1214ya for three days. 40 g of a solution of each formulation and 40 g of pure water controlled to pH 7 were charged into a 200 ml separatory funnel, followed by shaking for one minute, then left to stand thereby to separate into two phases, and an aqueous phase as the upper layer was collected and the pH of the aqueous phase was measured by means of a pH meter (model number: HM-30R, manufactured by DKK-TOA CORPORATION). Measurement results of pHs immediately after preparation and after storing are shown in Table 9. Ex. 121 is Comparative Example, and Ex. 122 to 126 are Examples of the present invention. According to these test results, effects of stabilizing CFO-1214ya were obtained even at the boiling point of CFO-1214ya in all of Examples of the present invention.

**[Table 9]**

| Ex. | Stabilizer (Concentration) | pH | |
|---|---|---|---|
| | | Immediately after preparation | After three days |
| 121 | Nil | 7.0 | 1.8 |
| 122 | 2,6-Di-tert-butyl-4-methylphenol (10 mass ppm) | 7.0 | 7.0 |
| 123 | 2,6-Di-tert-butyl-4-methylphenol (10 mass ppm) | 7.2 | 7.2 |
| | N-Methylpyrrole (10 mass ppm) | | |
| 124 | 2,6-Di-tert-butyl-4-methylphenol (0.1 mass%) | 7.1 | 7.1 |
| | N-Methylpyrrole (0.1 mass%) | | |
| 125 | 2,6-Di-tert-butyl-4-methylphenol (0.1 mass%) | 7.2 | 7.2 |
| | 1,2-Butylene oxide (0.1 mass%) | | |
| | N-Methylpyrrole (0.1 mass%) | | |
| 126 | 2,6-Di-tert-butyl-4-methylphenol (10 mass ppm) | 7.6 | 7.5 |
| | 1,2-Butylene oxide (100 mass ppm) | | |
| | N-Methylpyrrole (50 mass ppm) | | |
| | Diisopropylamine (50 mass ppm) | | |

### 2. Evaluation of cleaning performance

To CFO-1214ya having a purity of 99.9 mass%, only a stabilizer shown in Table 10 was added to prepare a formulation, followed by the respective cleaning tests as mentioned below.

### [Cleaning test A]

A test piece of USU-304 (25 mm × 30 mm × 2 mm) was dipped in a cutting oil "Daphne Marg plus HT-10" (manufactured by Idemitsu Kosan Co., Ltd.), product name, then dipped in 50 mL of the solvent composition in each Ex., and then taken out to observe the degree of removal of the cutting oil. The cleaning property was evaluated in accordance with the following standards.
"⊚ (excellent)": The cutting oil is completely removed.
"○ (good)": The cutting oil is substantially removed.
"Δ (poor)": The cutting oil slightly remains.
"x (bad)": The cutting oil substantially remains.

### [Cleaning test B]

A test was carried out in the same manner as in the cleaning test A except that "Daphne Marg plus AM20" (manufactured by Idemitsu Kosan Co., Ltd.), product name, was used as a cutting oil, to evaluate the cleaning property in accordance with the same standards as in the cleaning test A.

### [Cleaning test C]

A test was carried out in the same manner as in the cleaning test A except that "Daphne Marg plus HM25" (manufactured by Idemitsu Kosan Co., Ltd.), product name, was used as a cutting oil, to evaluate the cleaning property in accordance with the same standards as in the cleaning test A.

### [Cleaning test D]

A test was carried out in the same manner as in the cleaning test A except that "G-6318FK" (manufactured by Nihon Kohsakuyu Co., Ltd.), product name, was used as a cutting oil, to evaluate the cleaning property in accordance with the same standards as in the cleaning test A.

With respect to the cleaning solvent compositions having a composition shown in Table 10, the cleaning properties were evaluated.

As shown in Table, in any of the cleaning tests, the solvent composition of the present invention in each of Ex. 127 to 138 could sufficiently clean off and remove the cutting oil, as in Ex. 1 where no stabilizer was added, and was found to have excellent cleaning property.

**[Table 10]**

| | Stabilizer (Concentration) | Cleaning property | | | |
|---|---|---|---|---|---|
| | | Test A | Test B | Test C | Test D |
| 1 | Nil | ⊚ | ⊚ | ⊚ | ⊚ |
| 127 | 2,6-Di-tert-butyl-4-methylphenol (0.1 mass%) | ⊚ | ⊚ | ⊚ | ⊚ |
| 128 | 1,4-Dioxane (1 mass%) | ⊚ | ⊚ | ⊚ | ⊚ |
| 129 | 1,2-Butylene oxide (1 mass%) | ⊚ | ⊚ | ⊚ | ⊚ |
| 130 | N-Methylpyrrole (0.1 mass%) | ⊚ | ⊚ | ⊚ | ⊚ |
| 131 | 2,6-Di-tert-butyl-4-methylphenol (0.1 mass%) | ⊚ | ⊚ | ⊚ | ⊚ |
| | 1,4-Dioxane (1 mass%) | | | | |
| 132 | 2,6-Di-tert-butyl-4-methylphenol (0.1 mass%) | ⊚ | ⊚ | ⊚ | ⊚ |
| | 1,2-Butylene oxide (1 mass%) | | | | |
| 133 | 2,6-Di-tert-butyl-4-methylphenol (0.1 mass%) | ⊚ | ⊚ | ⊚ | ⊚ |
| | N-Methylpyrrole (0.1 mass%) | | | | |
| 134 | 1,4-Dioxane (1 mass%) | ⊚ | ⊚ | ⊚ | ⊚ |
| | 1,2-Butylene oxide (1 mass%) | | | | |
| 135 | 1,4-Dioxane (1 mass%) | ⊚ | ⊚ | ⊚ | ⊚ |
| | N-methylpyrrole (0.1 mass%) | | | | |
| 136 | 1,2-Butylene oxide (1 mass%) | ⊚ | ⊚ | ⊚ | ⊚ |
| | N-Methylpyrrole (0.1 mass%) | | | | |
| 137 | 2,6-Di-tert-butyl-4-methylphenol (0.1 mass%) | ⊚ | ⊚ | ⊚ | ⊚ |
| | 1,2-Butylene oxide (1 mass%) | | | | |
| | N-Methylpyrrole (0.1 mass%) | | | | |
| 138 | 2,6-Di-tert-butyl-4-methylphenol (0.1 mass%) | ⊚ | ⊚ | ⊚ | ⊚ |
| | N-Methylpyrrole (0.1 mass%) | | | | |
| | Diisopropylamineamine (0.1 mass%) | | | | |

### 3. Evaluation of performance as coating solvent

To CFO-1214ya having a purity of 99.9 mass%, the stabilizer shown in Table 1 was added to prepare a formulation, in the same manner as in the cleaning test. The solvent composition thus prepared and, as a fluorinated lubricant, "Krytox (registered trademark) GPL1202" (a fluorine type oil, manufactured by Du Pont), product name, were mixed to prepare a lubricant solution having a content of the fluorinated lubricant being 0.5 mass%.

Then, on the surface of an aluminum-vapor deposited plate having aluminum deposited on a plate made of iron, the resulting lubricant solution was applied in a thickness of 0.4 mm, followed by air drying at a temperature of from 19 to 21 °C, to form a coating film of the lubricant on the surface of the aluminum-vapor deposed plate. The performance as a lubricant was evaluated in the following manner.

### [Evaluation methods]

### [Dissolution state]

The dissolution state of the lubricant solution in each Ex. was visually confirmed and evaluated based on the following standards.
⊚ (excellent): The lubricant immediately dissolved uniformly and a transparent solution obtained.
○ (good): The lubricant uniformly dissolved by shaking and a transparent solution obtained.
Δ (poor): The solution became slightly turbid.
× (bad): White turbidity or phase separation observed.

### [Coating film state]

The state of the lubricant coating film in each Ex. was visually confirmed and evaluated based on the following standards.
⊚ (excellent): Uniform coating film observed.
○ (good): Substantially uniform coating film observed.
Δ (poor): Partial unevenness on coating film observed.
× (bad): Significant unevenness observed on coating film.

### [Drying property]

The drying property of the lubricant solution when the lubricant coating film was formed in each Ex. was evaluated based on the following standards.
⊚ (excellent): The solvent immediately evaporated.
○ (good): The solvent evaporated within ten minutes.
Δ (pass): The solvent not evaporated within ten minutes but evaporated within one hour.
× (bad): The solvent remained even after a lapse of 1 hour.

In Table 11, Ex. 139 to 150 are Examples of the present invention. As shown in Table 11, in any of the coating tests, it was clear that the lubricant solution of the present invention in each of Ex. 136 to 147 was excellent in solubility of a lubricant, further sufficient in dry properties, and capable of easily forming a uniform coating film of the lubricant, as in Ex. 1 where no stabilizer was added.

**[Table 11]**

| | Stabilizer (Concentration) | Dissolved state | Coating film state | Drying property |
|---|---|---|---|---|
| 1 | Nil | ⊚ | ⊚ | ⊚ |
| 139 | 2,6-Di-tert-butyl-4-methylphenol (0.1 mass%) | ⊚ | ⊚ | ⊚ |
| 140 | 1,4-Dioxane (1 mass%) | ⊚ | ⊚ | ⊚ |
| 141 | 1,2-Butylene oxide (1 mass%) | ⊚ | ⊚ | ⊚ |
| 142 | N-Methylpyrrole (0.1 mass%) | ⊚ | ⊚ | ⊚ |
| 143 | 2,6-Di-tert-butyl-4-methylphenol (0.1 mass%) 1,4-Dioxane (1 mass%) | ⊚ | ⊚ | ⊚ |
| 144 | 2,6-Di-tert-butyl-4-methylphenol (0.1 mass%) 1,2-Butylene oxide (1 mass%) | ⊚ | ⊚ | ⊚ |
| 145 | 2,6-Di-tert-butyl-4-methylphenol (0.1 mass%) N-Methylpyrrole (0.1 mass%) | ⊚ | ⊚ | ⊚ |
| 146 | 1,4-Dioxane (1 mass%) 1,2-Butylene oxide (1 mass%) | ⊚ | ⊚ | ⊚ |
| 147 | 1,4-Dioxane (1 mass%) N-Methylpyrrole (0.1 mass%) | ⊚ | ⊚ | ⊚ |
| 148 | 1,2-Butylene oxide (1 mass%) N-Methylpyrrole (0.1 mass%) | ⊚ | ⊚ | ⊚ |
| 149 | 2,6-Di-tert-butyl-4-methylphenol (0.1 mass%) 1,2-Butylene oxide (1 mass%) N-Methylpyrrole (0.1 mass%) | ⊚ | ⊚ | ⊚ |
| 150 | 2,6-Di-tert-butyl-4-methylphenol (0.1 mass%) N-Methylpyrrole (0.1 mass%) Diisopropylamine (0.1 mass%) | ⊚ | ⊚ | ⊚ |

### 4. Evaluation of cleaning property and texture of clothing

Using the solvent composition of the present invention, woolen white cardigan was washed to evaluate cleaning property, texture condition, and influences on buttons and spangles. The above cardigan had acryl resin-made buttons attached thereto and was decorated with spangles.

First, 10 L (15 kg) of the solvent composition (containing 2,6-di-tert-butyl-4-methylphenol and N-methylpyrrole respectively in amounts of 10 mass ppm) in the above Ex. 95 was prepared. Further, 75 g (0.5 mass%) of NF-98 (tradename: NF-98, manufactured by NICCA CHEMICAL CO., LTD.) as a soap was added thereto, with thorough stirring to prepare a test solvent to be used for a cleaning test.

The above cardigan soiled by wearing was cut into halves, and one of them was used for the cleaning test. The cleaning test was carried out at room temperature for 10 minutes by charging the above test solvent and the article to be cleaned into an about 11 L cleaning tank by using a dry cleaning tester (DC-1A manufactured by DAIEI KAGAKU SEIKI MFG. Co., Ltd.). Thereafter, the cardigan thus cleaned was taken out from the cleaning tank and sufficiently dried, and compared with the other half cardigan which was not cleaned, whereby the cleaning performance, the texture and the influences on the buttons and the spangles were evaluated. As Comparative Examples, the same test was carried out with HFC-365mfc and HFE-347pc-f as conventional cleaning solvents.

The results are such that the cardigan cleaned with the solvent composition in Examples 95 had the same cleaning property and texture as in the case of cleaning with the conventional solvents. Further, no influences on buttons and spangles were observed in the case of the cardigan cleaned with the solvent composition in Example 95. On the other hand, in the case of the conventional solvents, discoloration was observed in buttons and spangles, and therefore it becomes clear that the solvent composition of the present invention is superior to the conventional dry cleaning solvents.

### INDUSTRIAL APPLICABILITY

The solvent composition of the present invention is a stable solvent composition which provides an excellent solubility of various organic substances, has a sufficient drying property and no adverse influences on global environment, and is stabilized and not decomposed, and which can be used without adversely affecting objects made of various materials such as metal, plastic, elastomer, for a wide range of industrial use such as cleaning or coating.

The entire disclosure of Japanese Patent Application No. 2012-245590 filed on November 7, 2012 including specification, claims and summary is incorporated herein by reference in its entirety.

## Claims

1. A solvent composition comprising 1,1-dichloro-2,3,3,3-tetrafluoropropene, and at least one stabilizer selected from the group consisting of a phenol, an ether, an epoxide and an amine.

2. The solvent composition according to Claim 1, wherein said stabilizer is contained in an amount of from 1 mass ppm to 10 mass%, to 1,1-dichloro-2,3,3,3-tetrafluoropropene.

3. The solvent composition according to Claim 1 or 2, wherein 1,1-dichloro-2,3,3,3-tetrafluoropropene is contained in an amount of at least 80 mass%, to the solvent composition.

4. The solvent composition according to any one of Claims 1 to 3, wherein the phenol is phenol, 1,2-benzenediol, 2,6-di-tert-butyl-4-methylphenol, 3-cresol, 2-isopropyl-5-methylphenol or 2-methoxyphenol.

5. The solvent composition according to any one of Claims 1 to 4, wherein the phenol is contained in an amount of from 5 mass ppm to 5 mass%, to 1,1-dichloro-2,3,3,3-tetrafluoropropene.

6. The solvent composition according to any one of Claims 1 to 5, wherein the ether is 1,4-dioxane, 1,3-dioxane, 1,3,5-trioxane, furan, 2-methylfuran, tetrahydrofuran, ethyl phenyl ether or diethylene glycol monoethyl ether.

7. The solvent composition according to any one of Claims 1 to 6, wherein the ether is contained in an amount of from 0.01 mass% to 5 mass%, to 1,1-dichloro-2,3,3,3-tetrafluoropropene.

8. The solvent composition according to any one of Claims 1 to 7, wherein the epoxide is 1,2-propylene oxide, 1,2-butylene oxide, 1,2-epoxy-3-phenoxypropane, butyl glycidyl ether or diethylene glycol diglycidyl ether.

9. The solvent composition according to any one of Claims 1 to 8, wherein the epoxide is contained in an amount of from 0.01 mass% to 5 mass%, to 1,1-dichloro-2,3,3,3-tetrafluoropropene.

10. The solvent composition according to any one of Claims 1 to 9, wherein the amine is pyrrole, N-methylpyrrole, 2-methylpyridine, n-propylamine, diisopropylamine, N-methylmorphiline or N-ethymorphiline.

11. The solvent composition according to any one of Claims 1 to 10, wherein the amine is contained in an amount of from 5 mass ppm to 5 mass%, to 1,1-dichloro-2,3,3,3-tetrafluoropropene.

12. The solvent composition according to any one of Claims 1 to 11, which contains at least two types of said stabilizer, wherein at least one of them is a stabilizer of a phenol, and at least one of them is said stabilizer other than a phenol.

13. A cleaning method comprising cleaning an object to be cleaned, with the solvent composition as defined in any one of Claims 1 to 12.

14. The cleaning method according to Claim 13, wherein the object to be cleaned is clothing.

15. A method for forming a coating film of a lubricant, which comprises dissolving a lubricant in the solvent composition as defined in any one of Claims 1 to 12, applying a resulting lubricant composition on an object to be coated, and evaporating the solvent composition to form a coating film of the lubricant.
